# EUROPEAN PATENT APPLICATION

(11) **EP 4 318 353 A1**
(43) Date of publication of application: **07.02.2024**
(21) Application number: 22852020.1
(22) Date of filing: 28.07.2022
(51) Int. Cl.: G06Q 20/32

(54) **OFFLINE PAYMENT**

(30) Priority: 03.08.2021 CN 202110884418
(71) Applicant: Alipay.com Co. Ltd, Shanghai 200120 (CN)
(72) Inventor: WANG, Hao, Hangzhou, Zhejiang 310000 (CN)
(74) Representative: Fish & Richardson P.C.
(86) International application number: PCT/CN2022/108532
(87) International publication number: WO 2023/011306

(57) **Abstract**

According to an offline payment method and system provided in this specification, a payee terminal can synchronously transmit transaction information to a payer terminal in real time by using a target optical signal, to synchronously transmit the transaction information between the payer terminal and the payee terminal in real time during offline payment. In addition, according to the offline payment method and system provided in this specification, bidirectional verification can be implemented on the payer terminal and the payee terminal, to improve security of offline payment.

## Description

### TECHNICAL FIELD

This specification relates to the field of mobile payment technologies, and in particular, to offline payment methods and systems.

### BACKGROUND

With popularization of offline mobile payment, more users choose to perform code scanning payment by using a payer terminal in a shopping process. During code scanning payment in the existing technology, a payer opens a payment code on the payer terminal, a payee collects the payment code by using a payee terminal, and the payee terminal needs to send the payment code online to a remote payment server, to complete the payment process. Payment cannot be completed when the payer terminal is online but the payee terminal is offline and when both the payer terminal and the payee terminal are offline. In the existing technology, a scenario where offline payment can be implemented when the payee terminal is offline includes code scanning payment in a bus and a subway. This type of payment is limited by a network environment, and payment results are temporarily stored locally. After the network connection is restored, online verification and settlement are performed on the payment results together. As a result, the payer cannot receive the payment result in real time. However, this type of payment is only applicable to a low-amount payment scenario such as public transportation. Because relatively lower value does not cause a large loss, the payer is not sensitive to real-time performance of this type of payment. This type of payment is not applicable to large-amount consumption scenarios such as daily shopping malls.

Therefore, a more secure and real-time offline payment method and system need to be provided, so that when the payee terminal is in an offline state, payment can still be completed, and payment information can be synchronously sent to the payer terminal in real time.

### SUMMARY

This specification provides more secure and real-time offline payment methods and systems, so that when a payee terminal is in an offline state, payment can still be completed, and payment information can be synchronously sent to a payer terminal in real time.

According to a first aspect, this specification provides an offline payment method, applied to a payee terminal, where when the payee terminal is in an offline state, the offline payment method includes: enabling a collection function, and obtaining a payment code of a payer terminal, where the payment code includes a payment account associated with the payer terminal; generating a corresponding target optical signal based on transaction information, and transmitting the target optical signal within a predetermined range, where the transaction information includes at least a transaction amount and a collection account; and determining that the payee terminal is online, and sending collection information to a payment server, where the collection information includes the transaction information and the payment account, where when the payer terminal is within the predetermined range, the payer terminal can collect the target optical signal and identify the transaction information, and the payer terminal can send payment information to the payment server, where the payment information includes the transaction information and the payment account; and the payment server matches the collection information with the payment information, and after determining that the collection information matches the payment information, the payment server transfers the transaction amount from the payment account to the collection account.

In some embodiments, the transaction information further includes a transaction time, and the transaction time includes a time of obtaining the payment code.

In some embodiments, the transaction information further includes a transaction order identifier.

In some embodiments, the generating a corresponding target optical signal based on transaction information, and transmitting the target optical signal within a predetermined range includes: obtaining the transaction information; encoding the transaction information based on a predetermined encoding rule, to generate the target optical signal corresponding to the transaction information; and transmitting the target optical signal within the predetermined range by using an optical transmission module of the payee terminal.

In some embodiments, the encoding rule includes encoding at least one of the following items based on content of the transaction information: a quantity of light emission times, a light emission frequency, and illumination, color, and duration of each time of light emission of the target optical signal, and the payer terminal pre-stores the encoding rule.

In some embodiments, the sending collection information to a payment server includes: identifying the payment account based on the payment code; and sending the transaction information and the payment account to the payment server.

In some embodiments, the sending collection information to a payment server includes: sending the transaction information and the payment code to the payment server.

In some embodiments, after the generating a corresponding target optical signal based on transaction information, and transmitting the target optical signal within a predetermined range, the offline payment method further includes: generating and displaying offline payment success information.

In some embodiments, the predetermined range includes a valid identification distance of the payee terminal, the payer terminal is within the predetermined range of the payee terminal when the payer terminal is within the valid identification distance, and the payer terminal is outside the predetermined range of the payee terminal when the payer terminal is outside the valid identification distance.

According to a second aspect, this specification further provides an offline payment system, including a payee terminal, including: a collection module, an optical transmission module, at least one storage medium, and at least one processor, where the collection module is configured to collect a payment code of a payer terminal; the optical transmission module is located close to the collection module, and is configured to transmit a target optical signal within a predetermined range, where the target optical signal is generated based on transaction information, and the transaction information includes at least a transaction amount and a collection account; the at least one storage medium stores at least one instruction set for offline payment; and the at least one processor is communicatively connected to the collection module, the optical transmission module, and the at least one storage medium, where when the offline payment system runs, the at least one processor reads the at least one instruction set, and performs the offline payment method according to the first aspect of this specification based on instructions in the at least one instruction set.

In some embodiments, the target optical signal includes an infrared optical signal, and the optical transmission module includes at least one infrared lamp.

According to a third aspect, this specification further provides an offline payment method, applied to a payer terminal, and including: obtaining and displaying a payment code, where the payment code includes a payment account associated with the payer terminal, and the payment code can be collected by a payee terminal; collecting, by using an optical receiving module, a target optical signal sent by the payee terminal, where the target optical signal is an optical signal that is generated within a predetermined range of the payee terminal based on transaction information and that corresponds to the transaction information, and the transaction information includes at least a transaction amount and a collection account; identifying the transaction information based on the target optical signal; and when determining that the payer terminal is online, sending payment information to a payment server, where the payment information includes the transaction information and the payment account, where when the payee terminal is online, the payee terminal can send collection information to the payment server, where the collection information includes the transaction information and the payment account; and the payment server matches the collection information with the payment information, and after determining that the collection information matches the payment information, the payment server transfers the transaction amount from the payment account to the collection account.

In some embodiments, the transaction information further includes a transaction time, and the transaction time includes a time when the payee terminal device obtains the payment code.

In some embodiments, the transaction information further includes a transaction order identifier.

In some embodiments, the target optical signal is generated by the payee terminal by encoding the transaction information based on a predetermined encoding rule, and the payer terminal pre-stores the encoding rule; and the identifying the transaction information based on the target optical signal includes: decoding the target optical signal based on the encoding rule to obtain the transaction information.

In some embodiments, the encoding rule includes encoding at least one of the following items based on content of the transaction information: a quantity of light emission times, a light emission frequency, and illumination, color, and duration of each time of light emission of the target optical signal.

In some embodiments, after the identifying the transaction information based on the target optical signal, the offline payment method further includes: generating and displaying offline payment success information.

According to a fourth aspect, this specification further provides an offline payment system, including a payer terminal, including: an optical receiving module, at least one storage medium, and at least one processor, where the optical receiving module is configured to receive an optical signal; the at least one storage medium stores at least one instruction set for offline payment; and the at least one processor is communicatively connected to the optical receiving module and the at least one storage medium, where when the offline payment system runs, the at least one processor reads the at least one instruction set, and performs the offline payment method according to the third aspect of this specification based on instructions in the at least one instruction set, and the optical signal includes the target optical signal.

It can be seen from the above-mentioned technical solutions that, according to the offline payment methods and systems provided in this specification, the payee terminal can enable the collection function in response to a collection instruction, and collect the payment code of the payer terminal. When the payee terminal is in an offline state, the payee terminal can encode the transaction information as the target optical signal to send the target optical signal, so as to synchronously transmit the transaction information to the payer terminal in real time by using the target optical signal. When performing an action of code scanning payment, the payer terminal can synchronously receive the target optical signal in real time, and identify the transaction information included in the target optical signal. When the payee terminal is online, the payee terminal can send, to the payment server, the collection information including the transaction information and the payment account number. The payer terminal can send, to the payment server, the payment information including the identified transaction information and the payment account number. The payment server can match the collection information with the payment information, and when determining that the collection information matches the payment information, the payment server transfers the transaction amount from the payment account to the collection account to complete payment. The payment server can perform bidirectional verification on the payment information and the collection information to improve security of offline payment. According to the offline payment method and system provided in this specification, the payee terminal can synchronously transmit the transaction information to the payer terminal in real time by using the target optical signal, to synchronously transmit the transaction information between the payer terminal and the payee terminal in real time during offline payment. In addition, according to the offline payment method and system provided in this specification, bidirectional verification can be implemented on the payer terminal and the payee terminal, to improve security of offline payment. The transaction information is transmitted by using the optical signal, and no special communication protocol is needed. In addition, the payer terminal is generally equipped with the optical receiving module. Therefore, no hardware upgrade needs to be performed on the payer terminal, so that costs are effectively reduced, and a penetration rate is higher. In addition, the offline payment process does not include data collection, such as sound signal collection and image collection. Therefore, user information is not collected, and the user does not need to worry about user privacy in the offline payment process. Therefore, user sensitivity can be effectively reduced.

Other functions of the offline payment method and system provided in this specification are partially listed in the following descriptions. Based on the descriptions, the following numbers and examples will be clear to a person of ordinary skill in the art. The creative aspects of the offline payment method and system provided in this specification can be fully explained by practicing or by using the methods, apparatuses, and combinations in the following detailed examples.

### BRIEF DESCRIPTION OF DRAWINGS

To describe the technical solutions in embodiments of this specification more clearly, the following briefly describes the accompanying drawings needed for describing the embodiments. Clearly, the accompanying drawings in the following description are merely some embodiments of this specification, and a person of ordinary skill in the art can still derive other drawings from these accompanying drawings without creative efforts.
FIG. 1 is a schematic diagram illustrating an offline payment system, according to an embodiment of this specification;
FIG. 2 is a block diagram illustrating a hardware structure of a payee terminal, according to an embodiment of this specification;
FIG. 3 is a block diagram illustrating a hardware structure of a payer terminal, according to an embodiment of this specification;
FIG. 4 is a flowchart illustrating an offline payment method, according to an embodiment of this specification;
FIG. 5 is a flowchart illustrating generation of a target optical signal, according to an embodiment of this specification; and
FIG. 6 is a schematic diagram illustrating a target optical signal, according to an embodiment of this specification.

### DESCRIPTION OF EMBODIMENTS

The following descriptions provide specific application scenarios and needs of this specification, and are intended to enable a person skilled in the art to manufacture and use the content in this specification. Various local modifications to the disclosed embodiments are clear to a person skilled in the art, and the general principles defined here can be applied to other embodiments and applications without departing from the spirit and scope of this specification. Therefore, this specification is not limited to the shown embodiments, but encompasses the broadest scope consistent with the claims.

The terms used here are only intended to describe a particular example embodiment, and impose no limitation. For example, unless otherwise explicitly stated in the context, the singular forms "one", "an", and "the" used here can also include plural forms. When used in this specification, the terms "comprise", "contain", and/or "include" indicate the presence of associated integers, steps, operations, elements, and/or components, but do not exclude the presence of one or more other features, integers, steps, operations, elements, components, and/or groups, or that other features, integers, steps, operations, elements, components, and/or groups can be added to the system/method.

In view of the following descriptions, these and other features of this specification, operations and functions of related elements of structures, and economy of combination and manufacture of components can be significantly improved. Referring to the accompanying drawings, all of these form a part of this specification. However, it should be clearly understood that the accompanying drawings are only for the purpose of illustration and description, and are not intended to limit the scope of this specification. It should also be understood that the accompanying drawings are not drawn to scale.

A flowchart used in this specification illustrates operations implemented by a system according to some embodiments of this specification. It should be clearly understood that operations in the flowchart may not be implemented in sequence. In contrast, the operations can be implemented in reverse order or simultaneously. In addition, one or more other operations can be added to the flowchart. One or more operations can be removed from the flowchart.

An offline payment method and system in this specification can be applied to any mobile payment field, including but not limited to mobile payment on a shopping POS machine in a shopping mall, mobile payment on a self-service payment device, and mobile payment in a public transportation system. The offline payment method and system in this specification can be applied to passive code scanning payment, that is, a payer displays a payment code by using a payer terminal, and a payee terminal of a payee scans the payment code and identifies the payment code to complete payment. According to the offline payment methods and systems provided in this specification, transaction information can be transmitted to the payer terminal in real time by using an optical signal obtained through encoding, and the payer terminal identifies and stores the transaction information based on the received optical signal, to synchronously transmit the transaction information between the payer terminal and the payee terminal in real time. The "payer terminal", "merchant terminal", "mobile terminal", "merchant", and "payer" described in this specification are interchangeable, refer to a party that needs to perform payment, and can be an individual or a tool. The "payee terminal", "merchant terminal", "payee device", "merchant", and "payer" described in this specification are interchangeable, refer to a party that needs to perform collection, and can be an individual or a tool. It is worthwhile to note that application scenarios of the offline payment method and system provided in this specification are merely some examples or embodiments of this specification. A person of ordinary skill in the art can still apply the technical solutions of this specification to other similar scenarios such as other similar code scanning payment systems without creative efforts.

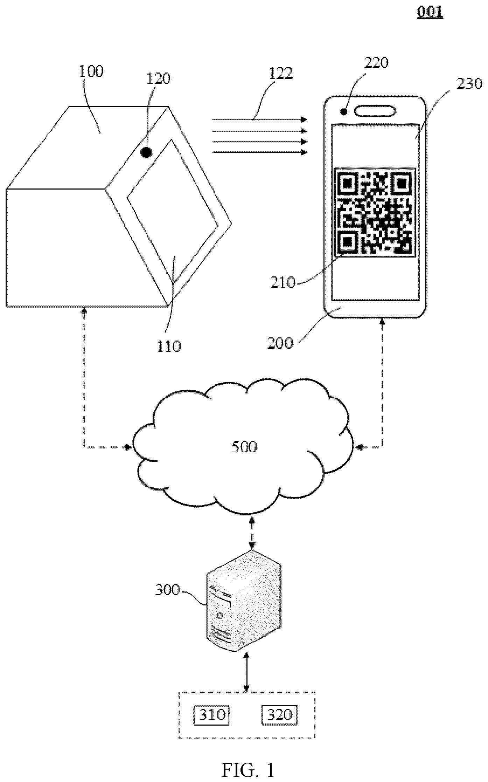

FIG. 1 is a schematic diagram illustrating an offline payment system 001, according to an embodiment of this specification. The offline payment system 001 (briefly referred to as the system 001 below) can include a payee terminal 100 and a payer terminal 200. In some embodiments, the system 001 can further include a payment server 300 and a network 400.

The payer terminal 200 can be a payment device used by a payer for mobile payment. The payer terminal 200 can store data or instructions for performing the offline payment method described in this specification, and can execute or be configured to execute the data and/or the instructions. The payer terminal 200 can be an intelligent terminal device installed with various applications (APP). The APP includes but is not limited to a payment type APP program, a chat type APP program, a shopping type APP program, a video type APP program, and a financial-management type APP program. The payer terminal 200 can be installed with a target APP. The target APP can be a payment type APP. The target APP can generate a payment code 210 and display the payment code 210 on a display screen of the payer terminal 200. The payment code 210 can include a payment account 320 associated with the payer terminal 200. The payment code 210 can be a two-dimensional code, or can be a barcode. In a mobile payment scenario, the payment code 210 can be a pay code. In a public transportation code scanning authentication scenario, the payment code 210 can be a transit code. In some embodiments, the payer terminal 200 can be a mobile device such as a smartphone, a tablet computer, and a notebook computer, or can be an intelligent wearable device such as a smart band, a smartwatch, a smart helmet, and smart glasses. In some embodiments, the payer terminal 200 can also be an intelligent device with a positioning function.

The payee terminal 100 can be a payee device used by a payee to implement mobile payment. The payee terminal 100 can store data or instructions for performing the offline payment method described in this specification, and can execute or be configured to execute the data and/or the instructions. The payee terminal 100 and the payer terminal 200 can perform a target transaction. The target transaction can include a service transaction. The service transaction can include but is not limited to taking a bus, taking a subway, taking a flight, taking a train, a dining service, and a hotel service. The target transaction can include a product transaction. The product can include a tangible product and an intangible product. For example, the tangible product can include but is not limited to a home appliance and a book, and the intangible product can include but is not limited to shares and options. The payee terminal 100 can collect the payment code 210 in the payer terminal 200, identify the payment code 210, and read information in the payment code 210, to complete a collection operation. In some embodiments, the payee terminal 100 can be a device such as a code scanner, a code reader, a mobile phone, a tablet computer, a personal computer (PC), a notebook computer, and a server. In the public transportation field, the payee terminal 100 can be a transit code scanning device, for example, a code scanning turnstile at an entrance and an exit of a subway, and a code scanning payment device at an entrance of a bus.

The payment server 300 can provide the payer and the payee terminal 100 with a solution to payment of fees for the target transaction. The payment server 300 can be a third-party payment server 300. The payment server 300 can store a plurality of accounts. The plurality of accounts include the payment account 320 corresponding to the payer. The payment server 300 can also store a collection account 310 corresponding to the payee terminal 100. A payment protocol can be established in advance between the payee terminal 100 and the payment server 300. The payment server 300 can help the payee terminal 100 charge the payer by using a digital resource transmission channel and based on the payment protocol. For example, the payment server 300 can extract a transaction amount of a target number from the payment account 320 corresponding to the payer by using the digital resource transmission channel, and transfer the transaction amount to the collection account 310 of the payee terminal 100.

The network 400 can facilitate exchange of information or data. As shown in FIG. 1, the payee terminal 100, the payer terminal 200, and the payment server 300 can be connected to the network 400, and transmit information or data to each other by using the network 400. In some embodiments, the network 400 can be any type of wired or wireless network, or can be a combination thereof. For example, the network 400 can include a cable network, a wired network, an optical fiber network, a telecommunication network, the intranet, an Internet, a local area network (LAN), a wide area network (WAN), a wireless local area network (WLAN), a metropolitan area network (MAN), a wide area network (WAN), a public switched telephone network (PSTN), a Bluetooth network, a ZigBee network, a near field communication (NFC) network, or a similar network.

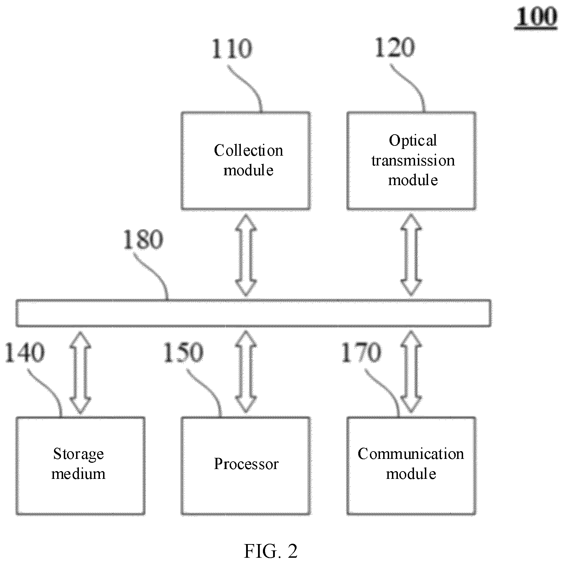

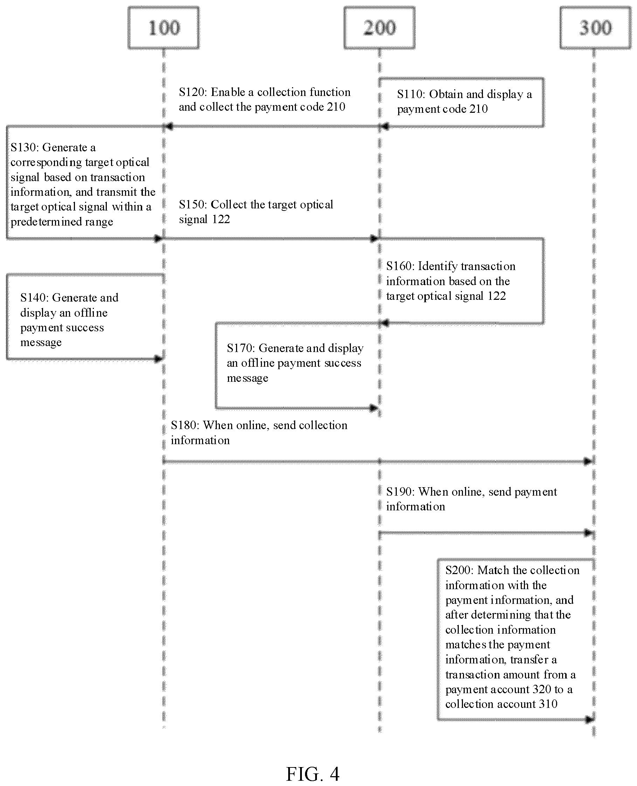

FIG. 2 is a block diagram illustrating a hardware structure of a payee terminal 100, according to an embodiment of this specification. The payee terminal 100 can perform the offline payment methods described in this specification. The offline payment method is described in other parts of this specification. For example, the offline payment method P100 is described in the descriptions in FIG. 4. As shown in FIG. 1 and FIG. 2, the payee terminal 100 can include a collection module 110, a transmission module 120, at least one storage medium 140, and at least one processor 150. In some embodiments, the payee terminal 100 can further include a communication module 170 and an internal communication bus 180.

The collection module 110 can be configured to collect the payment code 210 of the payer terminal 200. The collection module 110 can be a camera apparatus disposed on the payee terminal 100. The camera apparatus can be a device such as a camera lens, a video camera, and a camera, and collect image data within a predetermined range, to collect the payment code 210. The collection module 110 can interact with the payment code 210 based on a light beam. The collection module 110 can include a scanning window. The scanning window can be a transparent code scanning area. The camera apparatus can be located in the payee terminal 100, and scans the payment code 210 through the scanning window.

The optical transmission module 120 can be mounted at a location near the collection module 110. The optical transmission module 120 can be configured to transmit a target optical signal 122 within a predetermined range. The target optical signal 122 can be any form of optical signal. In some embodiments, the target optical signal 122 can be an invisible optical signal such as an infrared optical signal and a near-infrared optical signal. In some embodiments, the target optical signal 122 is a visible optical signal such as white light, red light, and blue light. For convenience of presentation, in the following descriptions, that the target optical signal 122 is an infrared optical signal is used as an example for description. When the target optical signal 122 is an infrared optical signal, the optical transmission module 120 can include at least one infrared lamp. The infrared lamp on the optical transmission module 120 can be selected as infrared lamps of different wavebands, usually 850 nm and 940 nm, and can cover different types of optical proximity sensors on mobile phones.

The target optical signal 122 corresponds to the transaction information. The target optical signal 122 can include the transaction information. Different target optical signals 122 signals carry different transaction information. The transaction information includes at least a transaction amount and a collection account. In some embodiments, the transaction information can further include a transaction time. The transaction time can be a time when the collection module 110 obtains the payment code 210. In some embodiments, the transaction information can further include a transaction order identifier. The transaction order identifier can be an order number of the target transaction. In some embodiments, the transaction information can further include information of the subject matter of the transaction. Among the transaction information, different types of transaction information can be separated by separators. Different types of transaction information can be represented by using different codes. For example, "A" represents the transaction amount, "B" represents the collection account, "C" represents the transaction time, "D" represents the transaction order identifier, and "E" represents the subject matter of the transaction. The payee terminal 100 can enable a collection function based on a collection instruction. The collection instruction can include the transaction information such as the transaction amount, the collection account, the transaction order identifier, and the subject matter of the transaction.

The optical transmission module 120 can be mounted at a predetermined location of the collection module 110. A distance between the optical transmission module 120 and the collection module 110 can be within a predetermined distance, so that the target optical signal 122 is within a predetermined range of the collection module 110. When the payer terminal 200 is within a valid identification distance of the payee terminal 100, the payer terminal 200 can be within the predetermined range, and the payer terminal 200 can receive the target optical signal 122. When the payer terminal 200 is outside a valid identification distance of the payee terminal 100 or a difference between the valid identification distance and a distance between the payer terminal 200 and the payee terminal 100 exceeds a predetermined threshold, the payer terminal 200 is outside the predetermined range, and the payer terminal 200 cannot receive the target optical signal 122. The payee terminal 100 can set or adjust the predetermined range, or can set or adjust the predetermined range by controlling a parameter of the optical transmission module 120. The predetermined range can be manually set or changed.

The internal communication bus 180 can be connected to different system components, including the storage medium 140, the processor 150, the communication module 170, the collection module 110, and the optical transmission module 120.

The storage medium 140 can include a data storage apparatus. The data storage apparatus can be a non-temporary storage medium, or can be a temporary storage medium. For example, the data storage apparatus can include one or more of a disk, a read-only storage medium (ROM), or a random access storage medium (RAM). The storage medium 140 further includes at least one instruction set stored in the data storage apparatus. The instruction is computer program code, and the computer program code can include a program, a routine, an object, a component, a data structure, a process, a module, etc. for performing the offline payment method P 100 provided in this specification.

The at least one processor 150 can be communicatively connected to the at least one storage medium 140, the collection module 110, the optical transmission module 120, and the communication module 170 by using the internal communication bus 180. The at least one processor 150 is configured to execute the at least one instruction set. When the payee terminal 100 runs, the at least one processor 150 reads the at least one instruction set, and performs the offline payment method P100 provided in this specification based on instructions in the at least one instruction set, to control, based on the transaction information, the optical transmission module 120 to transmit the target optical signal 122 corresponding to the transaction information within the predetermined range. The processor 150 can perform all steps included in the offline payment method P100. The processor 150 can be in the form of one or more processors. In some embodiments, the processor 150 can include one or more hardware processors, such as a microcontroller (MCU), a microprocessor, a reduced instruction set computer (RISC), an application-specific integrated circuit (ASIC), an application-specific instruction set processor (ASIP), a central processing unit (CPU), a graphics processing unit (GPU), a physical processing unit (PPU), a microcontroller unit, a digital signal processor (DSP), a field programmable gate array (FPGA), an advanced RISC machine (ARM), a programmable logic device (PLD), any circuit or processor that can execute one or more functions, or any combination thereof. Only for the purpose of illustration, only one processor 150 is described in the payee terminal 100 in this specification. However, it is worthwhile to note that the payee terminal 100 in this specification can alternatively include a plurality of processors 150. Therefore, operations and/or method steps disclosed in this specification can be performed by one processor 150 described in this specification, or can be jointly performed by a plurality of processors 150. For example, if the processor 150 in the payee terminal 100 performs step A and step B in this specification, it should be understood that step A and step B can also be performed jointly or separately by two different processors 150 (for example, a first processor performs step A and a second processor performs step B, or a first processor and a second processor jointly perform step A and step B).

The communication module 170 can be connected to the network 400, so that the payee terminal 100 performs data communication with the outside. For example, the payee terminal 100 can perform data transmission with the payment server 300 by using the communication module 170. The connection can be a wired connection, a wireless connection, or a combination of a wired connection and a wireless connection. The wired connection can include a cable, an optical cable, a telephone cable, or any combination thereof. The wireless connection can include Bluetooth, Wi-Fi, WiMax, WLAN, ZigBee, a mobile network (for example, 3G, 4G, or 5G), or any combination thereof. In some embodiments, when the payee terminal 100 is in an online state, that is, when the communication module 170 is connected to the network 400, the payee terminal can upload information in the obtained payment code 210 to the payment server 300 in real time by using the network 400. In some embodiments, when the payee terminal 100 is in an offline state, that is, when the communication module 170 is not connected to the network 400, the payee terminal can pre-store information in the obtained payment code 210 in the local storage medium 140, and when the payee terminal is in an online state, the payee terminal uploads the stored information in the payment code 210 to the payment server 300.

In some embodiments, the payee terminal 100 can further include a radio frequency sensing unit, an NFC communication unit, or any combination thereof.

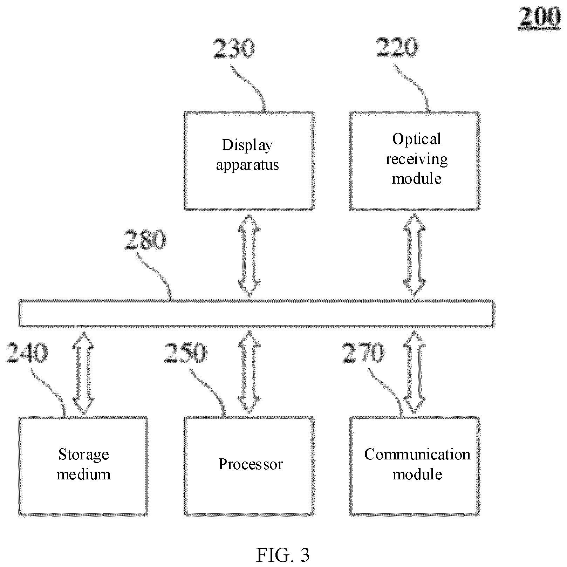

FIG. 3 is a block diagram illustrating a hardware structure of a payer terminal 200, according to an embodiment of this specification. The payer terminal 200 can perform the offline payment method described in this specification. The offline payment method is described in other parts of this specification. For example, the offline payment method P100 is described in the descriptions in FIG. 4. As shown in FIG. 1 and FIG. 3, the payer terminal 200 can include a display apparatus 230, an optical receiving module 220, at least one storage medium 240, and at least one processor 250. In some embodiments, the payer terminal 200 can further include a communication module 270 and an internal communication bus 280.

The display apparatus 230 can be a human-computer interaction interface between the payer terminal 200 and the payer. The payer terminal 200 can display the payment code 210 by using the display apparatus.

The optical receiving module 220 can be configured to receive an optical signal. The optical signal can include the target optical signal 122. When the target optical signal 122 includes an infrared optical signal, the optical receiving module 220 can include an infrared optical receiving module. In some embodiments, the optical receiving module 220 can be a photoelectric sensor. In some embodiments, when the payer terminal 200 is a smartphone or a tablet computer, the optical receiving module 220 can also be a camera lens on the payer terminal 200, etc. The optical receiving module 220 can be any device that can receive an optical signal and convert the optical signal into an electrical signal. No limitation is imposed in this specification. In some embodiments, the optical receiving module 220 can be an optical proximity sensor. A receiving angle of the optical proximity sensor generally uses, as a receiving angle of the optical proximity sensor, an angle range where received energy intensity is at least 50%.

The internal communication bus 280 can be connected to different system components, including the storage medium 240, the processor 250, the communication module 270, the display apparatus 230, and the optical receiving module 220.

The storage medium 240 can include a data storage apparatus. The storage medium 240 further includes at least one instruction set stored in the data storage apparatus. The instruction is computer program code, and the computer program code can include a program, a routine, an object, a component, a data structure, a process, a module, etc. for performing the offline payment method P100 provided in this specification.

The at least one processor 250 can be communicatively connected to the at least one storage medium 240, the display apparatus 230, the optical receiving module 220, and the communication module 270 by using the internal communication bus 280. The at least one processor 250 is configured to execute the at least one instruction set. When the payer terminal 200 runs, the at least one processor 250 reads the at least one instruction set, and performs the offline payment method P100 provided in this specification based on instructions in the at least one instruction set, to control the optical receiving module 220 to receive the target optical signal 122 generated by the payee terminal 100 and identify the transaction information carried in the target optical signal 122.

The communication module 270 can be connected to the network 400, so that the payee terminal 100 performs data communication with the outside. For example, the payer terminal 200 can perform data transmission with the payment server 300 by using the communication module 270. In some embodiments, when the payer terminal 200 is in an online state, that is, when the communication module 270 is connected to the network 400, the payer terminal can obtain the transaction information in real time from the payment server 300 by using the network 400. In some embodiments, when the payee terminal 100 is in an offline state, that is, when the communication module 170 is not connected to the network 400, the payer terminal can identify the transaction information from the target optical signal 122 sent by the payee terminal 100, and pre-store the transaction information in the local storage medium 240, and when the payer terminal 200 is in an online state, the payer terminal uploads the stored transaction information and the associated payment account to the payment server 300.

Because the optical transmission module 120 generates the target optical signal 122 within the predetermined range of the payee terminal 100, the payer terminal 200 can receive the target optical signal 122 only when the payer terminal is close to the payee terminal 100, for example, when the payer terminal performs a code scanning action. When the payer terminal 200 is not close to the payee terminal 100, that is, when the payer terminal does not perform a code scanning action, a distance between the payer terminal 200 and the payee terminal 100 is far, and the payer terminal 200 is outside the predetermined range and cannot receive the transaction information carried in the target optical signal 122. Therefore, when the optical transmission module 120 generates the target optical signal 122 within the predetermined range of the payee terminal 100, it can be ensured that the transaction information carried in the target optical signal 122 received by the payer terminal 200 is transaction information generated for the payer terminal 200 instead of transaction information generated for another payer terminal, thereby improving accuracy and reliability of data identification, preventing the payer terminal 200 from receiving transaction information of another device when there is no payment need, also preventing information from being disclosed because the transaction information of the payer terminal 200 is received by another device, and ensuring security while improving user experience.

FIG. 4 is a flowchart illustrating an offline payment method P 100, according to an embodiment of this specification. The payee terminal 100 and the payer terminal 200 can perform the offline payment method P 100. The offline payment method P 100 can be applied to a scenario where the payee terminal 100 is offline. In some embodiments, the payment server 300 can also perform the offline payment method P 100. The method P100 can include the following steps.

S110: The payer terminal 200 obtains and displays the payment code 210.

The payment code 210 can include the payment account 320 associated with the payer terminal 200. The payment code 210 is an encoded pattern generated by the payment account 320 by using a predetermined pattern encoding rule. The payer terminal 200 can pre-store an image encoding rule corresponding to the payment code 210 and the payment account 320. The payer terminal 200 can control the display apparatus 230 to display the payment code 210.

S120: The payee terminal 100 enables a collection function, and obtains the payment code 210 of the payer terminal 200.

The payee terminal 100 can enable the collection function based on a collection instruction, to control the collection module 110 to collect the payment code 210. In this case, the payer can bring the payer terminal 200 close to the payee terminal 100, so that the payer terminal 200 can be within the predetermined range of the payee terminal 100. The payee terminal 100 can pre-store the image encoding rule corresponding to the payment code 210 and the payment account 320. In some embodiments, after obtaining the payment code 210, the payee terminal 100 can identify the payment account 320 from the payment code 210 based on the pattern encoding rule, and store the payment account 320 in the payee terminal 100. In some embodiments, after obtaining the payment code 210, the payee terminal 100 can directly store the payment code 210 in the payee terminal 100.

S130: The payee terminal 100 generates the corresponding target optical signal 122 based on the transaction information, and transmits the target optical signal 122 within the predetermined range.

In some embodiments, the payee terminal 100 can directly start to perform step S130 after collecting the payment code 210. In some embodiments, to improve security and ensure authenticity of the payment code 210, the payee terminal 100 can identify the payment account 320 from the payment code 210 after collecting the payment code 210. Then, the payee terminal 100 performs validity verification on the payment account 320 to verify whether the payment account 320 is a valid payment account. When determining that the payment account 320 is a valid account, the payee terminal 100 performs step S130. For example, the payee terminal 100 can pre-store a basic feature of a valid payment account, such as an account structure composition and an account identifier. The payee terminal 100 can match the payment account 320 with the pre-stored basic feature, to verify whether the payment account 320 is a valid payment account.

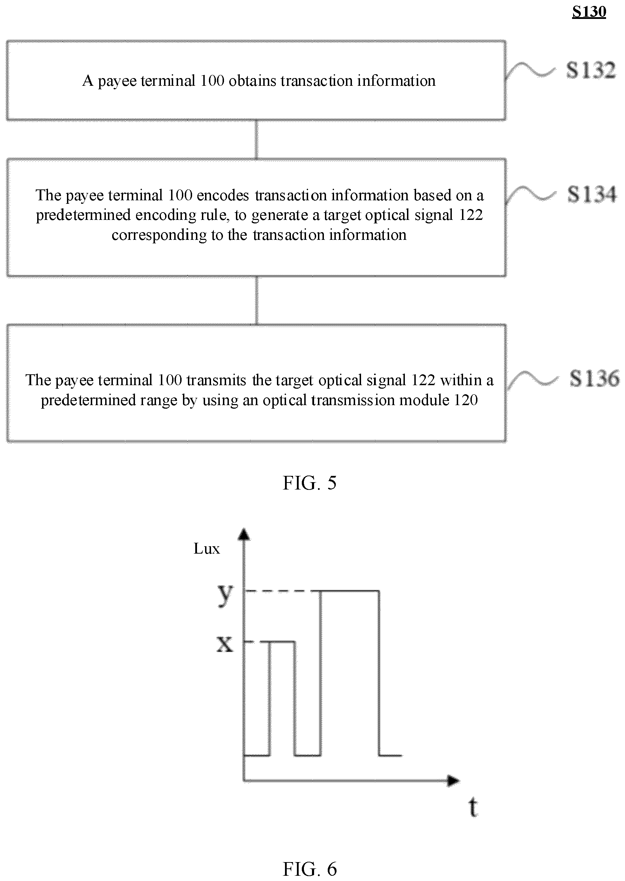

FIG. 5 is a flowchart illustrating generation of a target optical signal 122, according to an embodiment of this specification. FIG. 5 corresponds to step S130. As shown in FIG. 5, step S130 can include the following steps.

S132: The payee terminal 100 obtains the transaction information.

As described above, the collection instruction can include the transaction information such as the transaction amount, the collection account, the transaction order identifier, and the subject matter of the transaction. The payee terminal 100 can obtain the transaction information from the collection instruction. When the transaction information includes a transaction time, the payee terminal 100 can obtain, from the collection module 110, a time of collecting the payment code 210, and use the time as the transaction time.

S134: The payee terminal 100 encodes the transaction information based on a predetermined encoding rule, to generate the target optical signal 122 corresponding to the transaction information.

The payee terminal 100 can encode the transaction information based on the predetermined encoding rule to generate the target optical signal 122. The encoding rule can include encoding at least one of the following items based on content of the transaction information: a quantity of light emission times, a light emission frequency, and illumination, color, and duration of each time of light emission of the target optical signal 122. The payee terminal 100 can pre-store the encoding rule. The encoding rule can be an encoding reference table. The transaction information can be a character string, and characters in the string can be letters or numbers. The encoding reference table can include a correspondence between a character or a character string and an encoding method. The payee terminal 100 can obtain an encoding method corresponding to each character in the transaction information based on the encoding reference table, to obtain an encoding method corresponding to the transaction information.

FIG. 6 is a schematic diagram illustrating a target optical signal 122, according to an embodiment of this specification. As shown in FIG. 6, a horizontal axis is time t, and a vertical axis is illumination Lux. In the target optical signal 122 shown in FIG. 6, encoded content of the encoding method is to emit light two times, duration of the first time of light emission is 1 second, duration of the second time of light emission is 2 seconds, a time interval between two adjacent times of light emission is 1 second, an illumination value of the first time of light emission is x, and an illumination value of the second time of light emission is y. In this case, the target optical signal 122 generated in the encoding method stays lit for 1 second at the illumination value x, stays dark for 1 second, and stays lit for 2 seconds at the illumination value y.

The payee terminal 100 can encode the transaction information in different encoding methods, for example, Non-Return to Zero (NRZ), Manchester coding, and Differential Manchester encoding. The encoding method can be selected based on actual needs, and an encoding method with best or better robustness is selected. Details are omitted in this specification.

S136: The payee terminal 100 transmits the target optical signal 122 within the predetermined range by using the optical transmission module 120 of the payee terminal 100.

The payee terminal 100 can control the optical transmission module 120 to transmit the target optical signal 122 within the predetermined range in an encoded method.

It is worthwhile to note that, for each piece of transaction information, the payee terminal 100 generates the target optical signal 122 only within predetermined duration. In some embodiments, the predetermined duration can be any set duration. The predetermined duration can be set or changed. After the predetermined duration expires, the target optical signal 122 disappears. In some embodiments, the predetermined duration can be a time period from a time when the payment code 210 is generated and obtained to a time when the payer terminal 200 leaves the payee terminal 100. In some embodiments, the predetermined duration can be a predetermined time window after the payment code 210 is generated, obtained, and identified. In some embodiments, the predetermined duration can be a time period from a time when the target optical signal 122 starts to be generated to a time when the target optical signal 122 ends.

As shown in FIG. 4, the method P100 can further include the following steps.

S140: The payee terminal 100 generates and displays offline payment success information.

In some embodiments, after the payee terminal 100 completes sending of the target optical signal 122, the payee terminal 100 can generate and display the offline payment success information. In some embodiments, the payee terminal 100 can broadcast the offline payment success information to the outside. The broadcast can be public non-directional broadcast. The offline payment success information can include a public non-directional sound prompt signal. The sound prompt signal can include audio data and/or a prompt tone. For example, after the sending is completed, voice signals "Payment Success" and "Code Scanning Success" can be broadcast to the outside, or a prompt tone representing payment success can be broadcast to the outside, such as a prompt tone "beep". The payee terminal 100 can prompt, by using the offline payment success information, the payee that payment succeeds and the transaction is completed, to prevent the payer from waiting. In addition, the offline payment success information can indicate that the target optical signal 122 is fully transmitted, and the payer can keep the payer terminal 200 away from the payee terminal 100. If the payer terminal 200 leaves the payment payee terminal 100 when the target optical signal 122 is not fully transmitted, the payer terminal 200 cannot receive all target optical signals 122. This may lead to incomplete information transmission and further payment failure. Therefore, the payer can keep the payer terminal 200 away from the payee terminal 100 only after the payee terminal 100 displays the offline payment success information. In some embodiments, the payee terminal 100 can display the offline payment success information in the display apparatus. In this case, the offline payment success information can include the payment account 320, the transaction information, and collection success information.

When the payee terminal 100 is in an offline state, after the payee terminal 100 collects and successfully identifies the payment account 320, the payee terminal 100 can transmit the transaction information to the payer terminal 200 by using the target optical signal 122. In this case, the payee terminal 100 is in an offline state, and can temporarily store the transaction information and the payment account 320 in the payee terminal 100. When the payee terminal 100 is online and connected to the payment server 300, the payee terminal sends the transaction information and the payment account 320 to the payment server 300.

As shown in FIG. 4, the method P100 can further include: S150: The payer terminal 200 collects, by using the optical receiving module 220, the target optical signal 122 sent by the payee terminal 100.

In this case, the payer terminal 200 is within the predetermined range of the payee terminal 100 until the payer terminal 200 receives all target optical signals 122.

S160: The payer terminal 200 identifies the transaction information based on the target optical signal 122.

As described above, the target optical signal 122 is an optical signal generated through encoding based on the transaction information. The payer terminal 200 can pre-store the encoding rule. Step S170 can be that the payer terminal 200 decodes the target optical signal 122 based on the encoding rule to obtain the transaction information. The decoding corresponds to the encoding process, and details are omitted here for simplicity.

As shown in FIG. 4, the method P100 can further include: S170: The payer terminal 200 generates and displays offline payment success information.

In some embodiments, after the payer terminal 200 identifies the transaction information, the payer terminal 200 can generate and display the offline payment success information to prompt the payer that payment succeeds and the transaction is completed, to prevent the payer from waiting. The payer terminal 200 can pre-store a basic structural feature of the transaction information to verify whether the identified transaction information is valid and complete. The basic structural feature can include a composition category of a character string of the transaction information, a quantity of character strings of each category, etc. When the payer terminal 200 verifies that the identified transaction information satisfies the basic structural feature, it is proved that the payer terminal 200 receives the complete target optical signal 122 and identifies the complete and valid transaction information, representing that offline payment succeeds. In this case, the payer terminal 200 can generate and display the offline payment success information, to prompt the payer that payment succeeds and the transaction is completed. In addition, the offline payment success information can be used to prompt the payer that the payer terminal 200 has received the complete target optical signal 122, and the payer can keep the payer terminal 200 away from the payee terminal 100. If the payer terminal 200 leaves the payment payee terminal 100 when the target optical signal 122 is not fully transmitted, the payer terminal 200 cannot receive all target optical signals 122. This may lead to incomplete information transmission and further payment failure.

In some embodiments, the payer terminal 200 can broadcast the offline payment success information to the outside. The broadcast can be public non-directional broadcast. The offline payment success information can include a public non-directional sound prompt signal. The sound prompt signal can include audio data and/or a prompt tone. For example, the payer terminal 200 can broadcast voice signals "Payment Success" and "Code Scanning Success" to the outside, or can broadcast a prompt tone representing payment success to the outside, such as a prompt tone "beep".

In some embodiments, the offline payment success information can be displayed on the display apparatus 230 of the payer terminal 200. In this case, the offline payment success information can include the transaction information and payment success information.

When the payer terminal 200 is in an offline state, after the payer terminal 200 successfully identifies the transaction information, the payer terminal 200 can temporarily store the transaction information in the payer terminal 200. When the payer terminal 200 is online and connected to the payment server 300, the payer terminal 200 sends the transaction information and the payment account 320 to the payment server 300.

As shown in FIG. 4, the method P100 can further include: S180: When determining that the payee terminal 100 is online, the payee terminal 100 sends collection information to the payment server 300.

The collection information can include the transaction information and the payment account 320.

In some embodiments, step S180 can be that the payee terminal 100 identifies the payment account 320 based on the payment code 210, and the payee terminal 100 sends the transaction information and the payment account 320 to the payment server 300. In some embodiments, step S180 can be that the payee terminal 100 directly sends the transaction information and the payment code 210 to the payment server 300. The payment server 300 can identify the payment account 320 from the payment code 210.

As shown in FIG. 4, the method P100 can further include: S190: When determining that the payer terminal 200 is online, the payer terminal 200 sends payment information to the payment server 300.

The payment information can include the transaction information and the payment account 320.

S200: The payment server 300 matches the collection information with the payment information, and after determining that the collection information matches the payment information, the payment server transfers the transaction amount from the payment account 320 to the collection account 310. The payment server 300 can check the collection information and the payment information, to perform bidirectional verification on the transaction information in the payer terminal 200 and the payee terminal 100, thereby improving security of offline payment. Only when the collection information matches the payment information, the transaction amount is transferred from the payment account 320 to the collection account 310 to complete the transaction.

In conclusion, according to the offline payment method P100 and system 001 provided in this specification, the payee terminal 100 can enable the collection function in response to the collection instruction, and collect the payment code 210 of the payer terminal 200. When the payee terminal 100 is in an offline state, the payee terminal 100 can encode the transaction information as the target optical signal 122 to send the target optical signal, so as to synchronously transmit the transaction information to the payer terminal 200 in real time by using the target optical signal 122. When performing an action of code scanning payment, the payer terminal 200 can synchronously receive the target optical signal 122 in real time, and identify the transaction information included in the target optical signal 122. When the payee terminal 100 is online, the payee terminal 100 can send, to the payment server 300, the collection information including the transaction information and the payment account number 320. The payer terminal 200 can send, to the payment server 300, the payment information including the identified transaction information and the payment account number 320. The payment server 300 can match the collection information with the payment information, and when determining that the collection information matches the payment information, the payment server transfers the transaction amount from the payment account 320 to the collection account 310 to complete payment. The payment server 300 can perform bidirectional verification on the payment information and the collection information to improve security of offline payment. According to the offline payment method P100 and system 001 provided in this specification, the payee terminal 100 can synchronously transmit the transaction information to the payer terminal 200 in real time by using the target optical signal 122, to synchronously transmit the transaction information between the payer terminal 200 and the payee terminal 100 in real time during offline payment. In addition, according to the offline payment method P100 and system 001 provided in this specification, bidirectional verification can be implemented on the payer terminal 200 and the payee terminal 100, to improve security of offline payment. The transaction information is transmitted by using the optical signal, and no special communication protocol is needed. In addition, the payer terminal 200 is generally equipped with the optical receiving module 220. Therefore, no hardware upgrade needs to be performed on the payer terminal 200, so that costs are effectively reduced, and a penetration rate is higher. In addition, the offline payment process does not include data collection, such as sound signal collection and image collection. Therefore, user information is not collected, and the user does not need to worry about user privacy in the offline payment process. Therefore, user sensitivity can be effectively reduced.

Another aspect of this specification provides a non-temporary storage medium, storing at least one group of executable instructions for offline payment. When the executable instructions are executed by a processor, the executable instructions instruct the processor to implement steps of the offline payment method P100 described in this specification. In some possible implementations, aspects of this specification can be further implemented in a form of a program product, including program code. When the program product runs on a computing device, the program code is used to cause the computing device to perform steps of the offline payment method P100 described in this specification. A program product used to implement the above-mentioned method can be a portable compact disc read-only memory (CD-ROM) including program code, and can run on the computing device. However, the program product in this specification is not limited to this. In this specification, the readable storage medium can be any tangible medium that includes or stores a program, and the program can be used by or in combination with an instruction execution system. The program product can be any combination of one or more readable media. The readable medium can be a readable signal medium or a readable storage medium. The readable storage medium can be, for example but is not limited to, an electrical, magnetic, optical, electromagnetic, infrared, or semiconductor system, apparatus, or component, or any combination thereof. More specific examples of the readable storage medium include the following: an electrical connection with one or more leads, a portable disk, a hard disk, a random access memory (RAM), a read-only memory (ROM), an erasable programmable read-only memory (an EPROM or a flash memory), an optical fiber, a portable compact disc read-only memory (CD-ROM), an optical storage component, a magnetic storage component, or any suitable combination thereof. The computer-readable storage medium can include a data signal propagated in a baseband or as part of a carrier, and includes readable program code. The propagated data signal can be in a plurality of forms, including but not limited to an electromagnetic signal, an optical signal, or any suitable combination thereof. The readable storage medium can further be any readable medium other than the readable storage medium, and the readable medium can send, propagate, or transmit a program used by or in combination with an instruction execution system, apparatus, or device. The program code included in the readable storage medium can be transmitted by using any suitable medium, including but not limited to wireless, wired, an optical cable, RF, or any suitable combination thereof. Any combination of one or more program design languages can be used to write program code for performing operations in this specification. The program design language includes obj ect-oriented program design languages such as Java and C++, and further includes a conventional procedural program design language such as "C" or a similar program design language. The program code can be executed entirely on a computing device, partly on a computing device, as an independent software package, partly on a computing device and partly on a remote computing device, or entirely on a remote computing device.

Specific embodiments of this specification are described above. Other embodiments fall within the scope of the appended claims. In some situations, the actions or steps described in the claims can be performed in an order different from the order in the embodiments and the desired results can still be achieved. In addition, the process depicted in the accompanying drawings does not necessarily need a particular sequence or consecutive sequence to achieve the desired results. In some implementations, multi-tasking and concurrent processing are feasible or can be advantageous.

In conclusion, after reading the detailed disclosure, a person skilled in the art can understand that the detailed disclosure can be presented only by using examples, and may impose no limitation. Although not explicitly stated here, a person skilled in the art can understand that the needs of this specification encompass various proper changes, improvements, and modifications to the embodiments. These changes, improvements, and modifications are intended to be presented in this specification within the spirit and scope of the example embodiments of this specification.

In addition, some terms in this specification have been used to describe the embodiments of this specification. For example, "one embodiment", "embodiment", and/or "some embodiments" mean that specific features, structures, or characteristics described with reference to the embodiment can be included in at least one embodiment of this specification. Therefore, it should be emphasized and understood that references to two or more of "embodiment", "one embodiment", or "alternative embodiment" in various parts of this specification do not necessarily refer to the same embodiment. In addition, specific features, structures, or characteristics can be appropriately combined in one or more embodiments of this specification.

It should be understood that, in the above-mentioned descriptions of the embodiments of this specification, to help understand a feature, for the purpose of simplifying this specification, in this specification, various features are combined in a single embodiment, accompanying drawing, or descriptions thereof. However, this does not mean that a combination of these features is necessary. When reading this specification, a person skilled in the art can totally label a part of devices as separate embodiments for understanding. That is, the embodiments in this specification can also be understood as an integration of a plurality of sub-embodiments. It is also valid when content of each sub-embodiment is less than all features of a single above-disclosed embodiment.

Each patent, patent application, publication of a patent application, and other materials such as articles, books, instructions, publications, documents, and articles, cited in this specification, can be incorporated here by reference. The entirety of the content, for all purposes, except for any prosecution file history relating to the content, any identical prosecution file history that may be inconsistent or conflict with this specification, or any identical prosecution file history that may have a limiting effect on the broadest scope of the claims, is now or later associated with this specification. For example, if there is any inconsistency or conflict between descriptions, definitions, and/or use of terms associated with any included material and terms, descriptions, and/or definitions associated with this specification, the terms in this specification prevail.

Finally, it should be understood that the embodiments disclosed in this specification describe the principles of the embodiments of this specification. Other modified embodiments also fall within the scope of this specification. Therefore, the embodiments disclosed in this specification are merely examples and impose no limitation. A person skilled in the art can use an alternative configuration based on the embodiments in this specification to implement the application in this specification. Therefore, the embodiments of this specification are not limited to the embodiments accurately described in this application.

## Claims

1. An offline payment method, applied to a payee terminal, wherein when the payee terminal is in an offline state, the offline payment method comprises:
enabling a collection function, and obtaining a payment code of a payer terminal, wherein the payment code comprises a payment account associated with the payer terminal;
generating a corresponding target optical signal based on transaction information, and transmitting the target optical signal within a predetermined range, wherein the transaction information comprises at least a transaction amount and a collection account; and
determining that the payee terminal is online, and sending collection information to a payment server, wherein the collection information comprises the transaction information and the payment account, wherein
when the payer terminal is within the predetermined range, the payer terminal can collect the target optical signal and identify the transaction information, and the payer terminal can send payment information to the payment server, wherein the payment information comprises the transaction information and the payment account; and the payment server matches the collection information with the payment information, and after determining that the collection information matches the payment information, the payment server transfers the transaction amount from the payment account to the collection account.

2. The offline payment method according to claim 1, wherein the transaction information further comprises a transaction time, and the transaction time comprises a time of obtaining the payment code.

3. The offline payment method according to claim 1, wherein the transaction information further comprises a transaction order identifier.

4. The offline payment method according to claim 1, wherein the generating a corresponding target optical signal based on transaction information, and transmitting the target optical signal within a predetermined range comprises:
obtaining the transaction information;
encoding the transaction information based on a predetermined encoding rule, to generate the target optical signal corresponding to the transaction information; and
transmitting the target optical signal within the predetermined range by using an optical transmission module of the payee terminal.

5. The offline payment method according to claim 4, wherein the encoding rule comprises encoding at least one of the following items based on content of the transaction information: a quantity of light emission times, a light emission frequency, and illumination, color, and duration of each time of light emission of the target optical signal, and the payer terminal pre-stores the encoding rule.

6. The offline payment method according to claim 1, wherein the sending collection information to a payment server comprises:
identifying the payment account based on the payment code; and
sending the transaction information and the payment account to the payment server.

7. The offline payment method according to claim 1, wherein the sending collection information to a payment server comprises:
sending the transaction information and the payment code to the payment server.

8. The offline payment method according to claim 1, wherein after the generating a corresponding target optical signal based on transaction information, and transmitting the target optical signal within a predetermined range, the offline payment method further comprises:
generating and displaying offline payment success information.

9. The offline payment method according to claim 1, wherein the predetermined range comprises a valid identification distance of the payee terminal, the payer terminal is within the predetermined range of the payee terminal when the payer terminal is within the valid identification distance, and the payer terminal is outside the predetermined range of the payee terminal when the payer terminal is outside the valid identification distance.

10. An offline payment system, comprising a payee terminal, comprising:
a collection module, configured to collect a payment code of a payer terminal;
an optical transmission module, located close to the collection module, and configured to transmit a target optical signal within a predetermined range, wherein the target optical signal is generated based on transaction information, and the transaction information comprises at least a transaction amount and a collection account;
at least one storage medium, storing at least one instruction set for offline payment; and
at least one processor, communicatively connected to the collection module, the optical transmission module, and the at least one storage medium, wherein
when the offline payment system runs, the at least one processor reads the at least one instruction set, and performs the offline payment method according to any one of claims 1 to 9 based on instructions in the at least one instruction set.

11. The offline payment system according to claim 10, wherein the target optical signal comprises an infrared optical signal, and the optical transmission module comprises at least one infrared lamp.

12. An offline payment method, applied to a payer terminal, and comprising:
obtaining and displaying a payment code, wherein the payment code comprises a payment account associated with the payer terminal, and the payment code can be collected by a payee terminal;
collecting, by using an optical receiving module, a target optical signal sent by the payee terminal, wherein the target optical signal is an optical signal that is generated within a predetermined range of the payee terminal based on transaction information and that corresponds to the transaction information, and the transaction information comprises at least a transaction amount and a collection account;
identifying the transaction information based on the target optical signal; and
when determining that the payer terminal is online, sending payment information to a payment server, wherein the payment information comprises the transaction information and the payment account, wherein
when the payee terminal is online, the payee terminal can send collection information to the payment server, wherein the collection information comprises the transaction information and the payment account; and the payment server matches the collection information with the payment information, and after determining that the collection information matches the payment information, the payment server transfers the transaction amount from the payment account to the collection account.

13. The offline payment method according to claim 12, wherein the transaction information further comprises a transaction time, and the transaction time comprises a time when the payee terminal device obtains the payment code.

14. The offline payment method according to claim 12, wherein the transaction information further comprises a transaction order identifier.

15. The offline payment method according to claim 14, wherein the target optical signal is generated by the payee terminal by encoding the transaction information based on a predetermined encoding rule, and the payer terminal pre-stores the encoding rule; and
the identifying the transaction information based on the target optical signal comprises:
decoding the target optical signal based on the encoding rule to obtain the transaction information.

16. The offline payment method according to claim 15, wherein the encoding rule comprises encoding at least one of the following items based on content of the transaction information: a quantity of light emission times, a light emission frequency, and illumination, color, and duration of each time of light emission of the target optical signal.

17. The offline payment method according to claim 12, wherein after the identifying the transaction information based on the target optical signal, the offline payment method further comprises:
generating and displaying offline payment success information.

18. An offline payment system, comprising a payer terminal, comprising:
an optical receiving module, configured to receive an optical signal;
at least one storage medium, storing at least one instruction set for offline payment; and
at least one processor, communicatively connected to the optical receiving module and the at least one storage medium, wherein
when the offline payment system runs, the at least one processor reads the at least one instruction set, and performs the offline payment method according to any one of claims 12 to 17 based on instructions in the at least one instruction set, and the optical signal comprises the target optical signal.
